# EUROPEAN PATENT SPECIFICATION

(11) **EP 3 037 023 B1**
(45) Date of publication and mention of the grant of the patent: **26.04.2017**
(21) Application number: 15193743.0
(22) Date of filing: 09.11.2015
(51) Int. Cl.: A47J 31/44

(54) **DEVICE FOR CARRYING OUT THE CONNECTION OF A FILTER-HOLDER TO THE RELATIVE DISPENSING GROUP OF AN ESPRESSO COFFEE MACHINE**
VORRICHTUNG ZUR AUSFÜHRUNG DER VERBINDUNG EINES FILTERHALTERS AN EINE ZUGEHÖRIGE AUSGABEGRUPPE EINER ESPRESSOKAFFEEMASCHINE
DISPOSITIF POUR LA MISE EN OEUVRE DE LA CONNEXION D'UN PORTE-FILTRE POUR LE GROUPE DE DISTRIBUTION RELATIVE D'UNE MACHINE À CAFÉ EXPRESSO

(30) Priority: 22.12.2014 IT MI20142213
(43) Date of publication of application: 29.06.2016
(73) Proprietor: Gruppo Cimbali S.p.A., 20082 Binasco (MI) (IT)
(72) Inventor: MOSCONI, Claudio, 20082 Binasco (MI) (IT)
(74) Representative: Perani, Aurelio

(56) References cited:
- EP-A1- 0 184 561
- EP-A1- 2 599 413
- WO-A1-2005/058111

## Description

The present invention refers to a device for carrying out the connection of a filter-holder of an espresso coffee machine to the relative hot water dispensing group for producing the beverage, wherein the filter-holder comprises a body, provided with a handle, with a cavity inside it defined by a cylindrical wall, said cavity constituting a housing for the filter to be loaded with the ground coffee and being open at the ends facing towards the dispensing group and closed with a bottom wall at the opposite end, a beverage dispensing opening formed in said bottom wall, a pair of diametrically opposite tabs projecting radially from said side wall and extending for a circumferential portion outside of said cavity, and wherein the dispensing group comprises an opening suitable for receiving the open end of the cavity of the body of the filter-holder and a pair of guides extending helically about an axis perpendicular to the plane on which the connection between filter-holder and dispensing group occurs, arranged around said opening and each suitable for receiving a respective tab of said pair of tabs of the filter-holder on it, through bayonet coupling.

Devices of the type indicated above are known in the field.

The structure with which they are made forces the barista to manually lock the filter-holder, in which the panel of coffee is located, against the opening of the dispenser that is fixed to the coffee machine.

As known, in order to carry out such an operation, the barista must grip the handle of the filter-holder, insert the tabs of the filter-holder into the opening of the dispenser and apply an angular displacement to the filter-holder. Through this angular displacement the tabs of the filter-holder move along the opposite helical guides formed along the inner surface of the mouth of the dispenser. In this way, the filter-holder undergoes a translation towards the dispensing group. When the filter-holder is sealably coupled with a gasket present in the seat of the dispensing group, the barista proceeds by giving a further angular displacement to the filter-holder until it is locked in the body of the dispenser and it is no longer possible to proceed with further angular displacements unless excessive force is used.

A correct coupling is essential for the preparation of a coffee beverage.

Indeed, it is known that for the preparation of such a beverage it is necessary to send hot water, at about 85-90°C, and at a pressure comprised between 8 and 10 bar onto the coffee powder contained in the filter of the filter-holder. If the coupling is not made perfectly, the filter-holder, during dispensing, could release from the body of the dispenser and the hot beverage could hit the operator. In less serious cases, on the other hand, part of the beverage could still leak out from the edge of the filter carrying part of the coffee powder into the cup.

For these reasons the filter-holder must be gripped by the barista fairly firmly.

However, this means that the operator is subject to tiring particularly when the locking operations of the filter-holder are frequent as occurs in the busy times when the beverage is consumed the most.

Other drawbacks deriving from the operation of insertion of a filter-holder in the relative dispensing group, concern the wearing of the tabs and of the sealing gasket.

Indeed, the tabs, through their roto-translation movement along the helical guides, wear out by friction and such wearing is increasingly marked the greater the use of the corresponding filter-holder for the preparation of the coffee. When this occurs, the locked position of the filter-holder in the body of the dispenser is no longer the initial one and the operator must increasingly angularly move the filter-holder until a new position is found at which the filter-holder is again correctly locked to the dispensing group.

Moreover, the sealing gasket can undergo deformations determined by the compression exerted by the filter and by the high temperature of the seat in which it is positioned. Also in this case problems arise for the sealed coupling.

The conditions described above relative to the prior art are then worsened by the fact that the state of wear of the components is not made clear to the operator through the sending of relative information shown, for example, on the user interface, even when the machine is provided with one. The operator only becomes aware of the state of wear of the components if and when he/she notices a new locking position of the filter-holder at a greater angle of rotation that becomes necessary.

If the maintenance intervention is not carried out according to the time periods suggested by the user manual, the operator may, in the attempt to grip and lock the filter-holder to the dispensing group, make it do a complete turn, causing the filter-holder to release.

There could even be the case of the new locked position being so close to the final part of the path of the helical guides that such a part is no longer sufficient to withstand the pressure that is produced during the preparation of the beverage and causes a yielding of the structure with consequent serious damage to objects and people.

In order to limit these drawbacks, it has already been proposed, for example in document CH 392.808, to use a dispensing group consisting of a fixed part and a mobile part. In accordance with what is described in such a document, in the act of preparing the coffee-based beverage, the operator inserts the filter-holder into the fixed part of the dispensing group. Following such insertion, a hydraulic linkage is activated that determines a displacement of only axial translation of the mobile part of the dispensing group towards the fixed part and then towards the filter-holder that is positioned on this part.

Since the sealed coupling between the edge of the filter and the gasket of the dispensing group is obtained only through translation movement, the wearing of the tabs is reduced since the possible wearing of the gasket is limited to that deriving from only the compression action and from its intrinsic deterioration due to the high operating temperature of the dispensing group in which it is located.

Although it offers advantages with respect to a coupling of the filter-holder carried out completely manually, the hydraulic linkage proposed in this prior document has some drawbacks.

First of all, such a linkage is very slow and penalises the production of a coffee machine that needs to include it.

Secondly, it causes the formation of a lot of deposits of lime that occurs through the heating of the water moving the mobile part while it stays in the dispensing group.

Finally, it causes high heat dispersion between the dispensing group and the mains water, necessary for the hydraulic movement, with a negative impact on the efficiency of the machine.

In accordance with another development of the prior art, described in EP 2.599.413, with the advent of electro-mechanical and electronic components, it has been proposed to make automatic the sealed coupling linkage between the gasket, present on the dispensing group, and the filter that contains the coffee powder and that is located in the filter-holder.

In the aforementioned prior art document, a motorised linkage is indeed described through which the filter-holder is brought into abutment against the fixed dispensing group, with movements that do not necessitate rotations or angular displacements.

In accordance with such a prior art, the support of the filter-holder is slidingly sealed with the dispensing group and in rest conditions, i.e. when no beverage is being prepared, it is partially outside of the dispensing group itself.

The rest position of the support of the filter-holder was selected so as to facilitate and speed up the insertion of the filter-holder itself and therefore the preparation of the beverage. The partial extension outside of the support of the filter-holder, slidably coupled with the dispensing group, however, has the drawback of an increased heat dispersion of the dispensing group itself.

This leads to a decrease in its temperature with a worsening of the quality of the coffee produced and dispensed.

The purpose of the present invention is therefore to solve the problem of coupling a filter-holder with the relative hot water dispensing group for preparing a coffee-based beverage through a device that is as free as possible from the drawbacks encountered in the devices of the aforementioned prior art and that allows the coupling to be obtained with adequate locking, repeatable over time, irrespective of the locking force applied by the operator.

Moreover, another purpose of the invention is to make the aforementioned coupling servo-assisted so as to alleviate the operator from possible tiring from frequent and repeated manoeuvres.

This and other purposes that will become clearer from the rest of the description are achieved by a device that is characterised in accordance with claim 1 which follows.

The invention will not be described more with reference to a preferred embodiment thereof, illustrated, as an indicating but not limiting example, in the attached drawings in which:
- Figure 1 shows a schematic perspective view of a dispensing group of a professional espresso coffee machine;
- Figure 2 shows a side view of the device according to the invention with the filter-holder inserted;
- Figure 3 shows a front view of the device according to the invention with the filter-holder inserted;
- Figure 4 shows a plan view of the same device of figure 2 with the filter-holder inserted;
- Figure 5 shows an enlarged section view carried out along the line V - V of figure 3;
- Figure 6 shows 5 shows a section view of the device carried out along the line V - V of figure 3 with the end of the dispenser inserted in the device according to the invention;
- Figure 7 shows an exploded view of the device according to the invention;
- Figure 8 shows an enlarged perspective view of only the annular element of the device according to the invention;
- Figures 9A and 9B show schematic perspective views of the steps of insertion and stopping of the filter-holder in the device according to the invention.

With reference to the aforementioned figures, a conventional dispensing group of a professional machine for preparing coffee-based beverages has been wholly indicated with 1. The dispensing group 1, which comprises a body 2, is conventionally connected, through the arm 3, to the coffee machine, not illustrated, and, through suitable conventional ducts, it is connected to a hot water source, also not illustrated in the drawings.

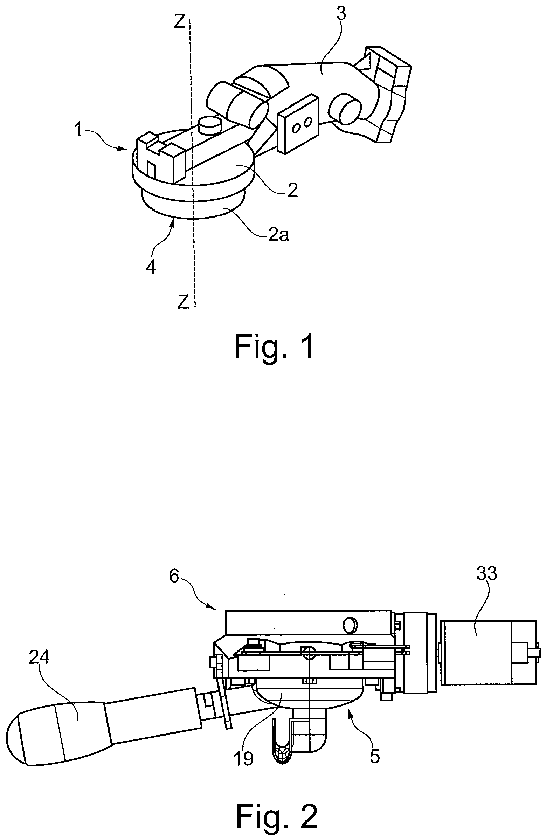

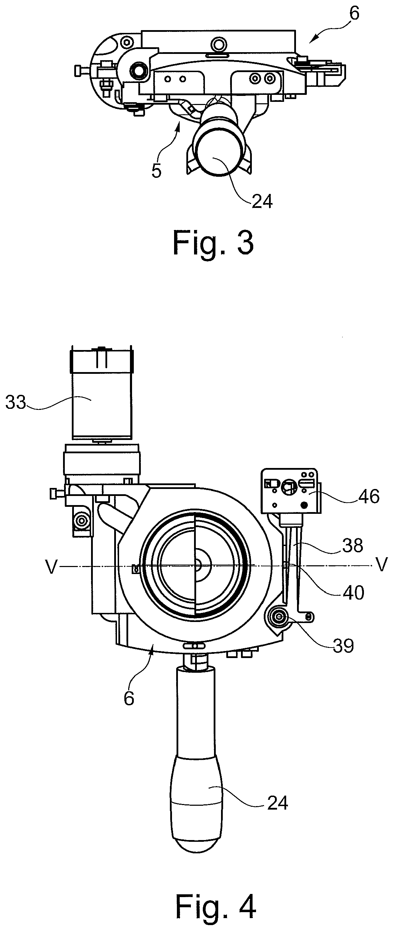

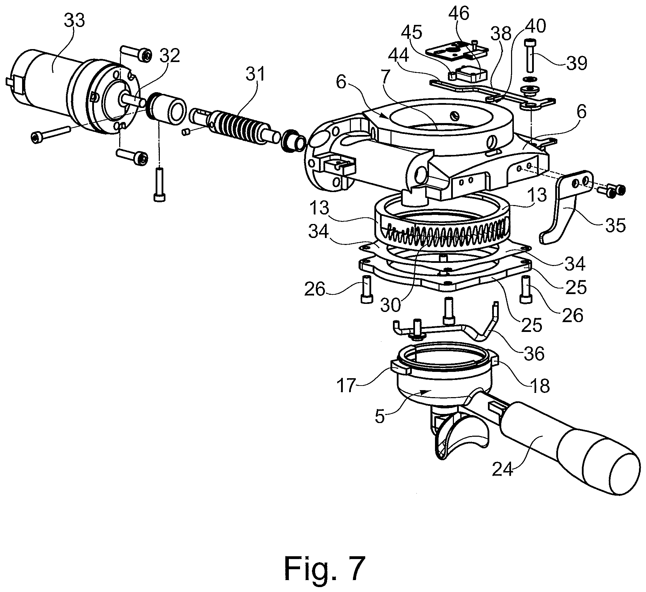

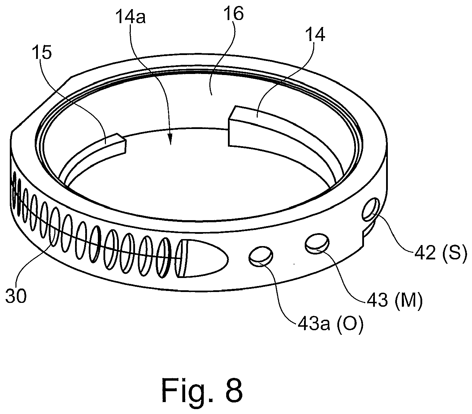

Alternatively, the body 2 of the dispenser can be equipped directly with a small boiler for producing the hot water that will be dispensed through the opening 4 to which, as will be seen hereinafter, through the device according to the invention, the filter-holder is connected, wholly indicated with 5 in figures 2 to 9.

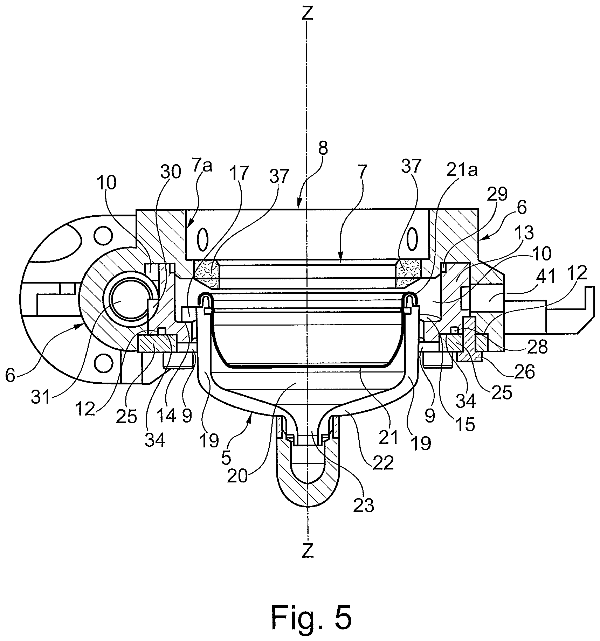

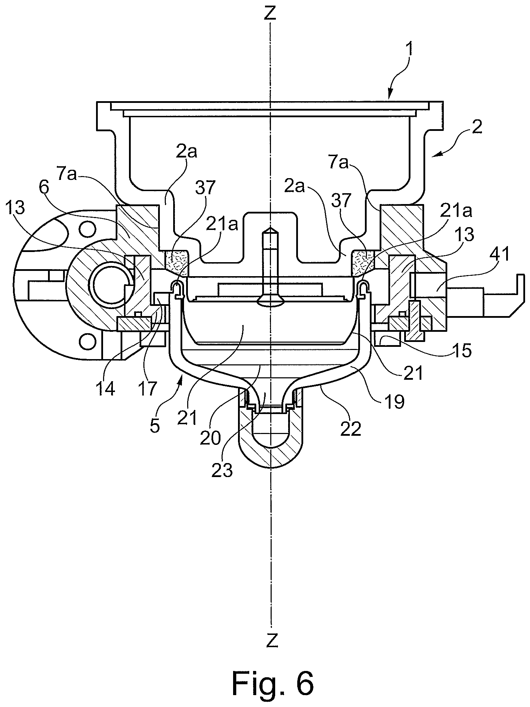

With particular reference to figures 5 and 6, it should be noted that the device according to the invention comprises a plate-shaped element 6 provided with a tubular cavity 7, open at both axial ends 8 and 9 that, when the device is mounted on the body 2 of the dispensing group, are arranged in frontal alignment with the opening 4 of the dispensing group itself.

Indeed, as can be observed in figure 6, the plate-shaped element 6 should be considered connected to the dispensing group 1 at its opening 4 with the cylindrical end 2a of the body 2 inserted in the collar-shaped portion 7a, of the axial cavity 7 and held here through conventional fixing members.

The cavity 7, in another axial portion thereof 10 arranged in distal position with respect to said opening 4 of the dispensing group 1, has annular abutments 11 and 12 between which an annular element 13 is housed, which is free to rotate about the longitudinal axis Z-Z of the same tubular cavity 7, an axis that coincides with the axis perpendicular to the plane of the opening 4 of the dispensing group 1.

A pair of guides 14 and 15, extending helically with respect to the axis Z-Z of the tubular cavity 7 and therefore also of the annular element 13, is formed on the inner wall 16 of the same annular element 13.

As will be described in more detail hereinafter, the opposite tabs 17 and 18 engage with such helically-extending guides, said tabs projecting from the side wall 19 of the filter-holder 5 in the cavity 20 of which a filter 21 is conventionally positioned in which a dose of ground coffee for producing the beverage is positioned.

The filter-holder 5 that, in its bottom wall 22 is provided with an opening 23 going into a conventional spout for dispensing the beverage, is inserted manually by the operator into the plate-shaped element 6 making it pass through the end opening 9 of the tubular cavity 7 and positioning its tabs 17 and 18 on the corresponding helically-extending guides 14 and 15 with a bayonet-type insertion movement, making them pass in the free spaces 14a present between one guide and the other.

The manipulation of the filter-holder 5 is carried out by the operator using the conventional handle 24 fixed radially to the side wall 19.

In accordance with the invention, the device is provided with an annular plate 25 that, through screw members 26, is fixed to the element 6 about the opening 9 forming the abutment 12 against which the annular element 13 abuts, with the interposition of a sealing member, for example an O-ring type gasket, indicated with 28.

A further sealing gasket 29 is positioned between the annular element 13 and the abutment 11 of the tubular cavity 7.

In accordance with the invention, the device comprises motor means for giving the annular element 13 an angular displacement about the axis Z-Z both in one direction, for example clockwise, and in the opposite direction, as will become clearer from the rest of the description.

In a preferred embodiment, such motor means comprise a rack 30 formed on at least a part of the outer surface of said annular element 13 and a worm screw 31, fitted onto the shaft 32 of an electric motor 33, coupled with said rack 30.

Alternatively, such motor means are of the hydraulic type comprising a cylinder with piston and levers coupled with said annular element 13.

In order to reduce the friction that develops between the annular element 13 and the abutment 12 of the tubular cavity 7, when the annular element 13 is subjected to the angular displacements, the device foresees the positioning of a sheet 34 of self-lubricating material between the annular plate 25 and the same annular element 13.

In accordance with the invention, the device also comprises a locking member to engage and hold the handle 24 of the filter-holder 5 when the filter-holder is inserted in said tubular cavity 7 and the tabs 17 and 18 are positioned on the respective helically-extending guides 14 and 15.

Said locking member, in an embodiment thereof, consists of a hook 35 that collaborates with an elastic element 36 which allows the passage of the handle 24 both when it is moved angularly towards the hook 35 and when it is moved in the opposite direction to free it from the aforementioned hook, even applying a sufficient contrast to hole the aforementioned handle 24 against the hook 35 when, as will be seen hereafter, the filter-holder 5 is moved axially along the axis Z-Z to bring it closed with the dispensing group 1.

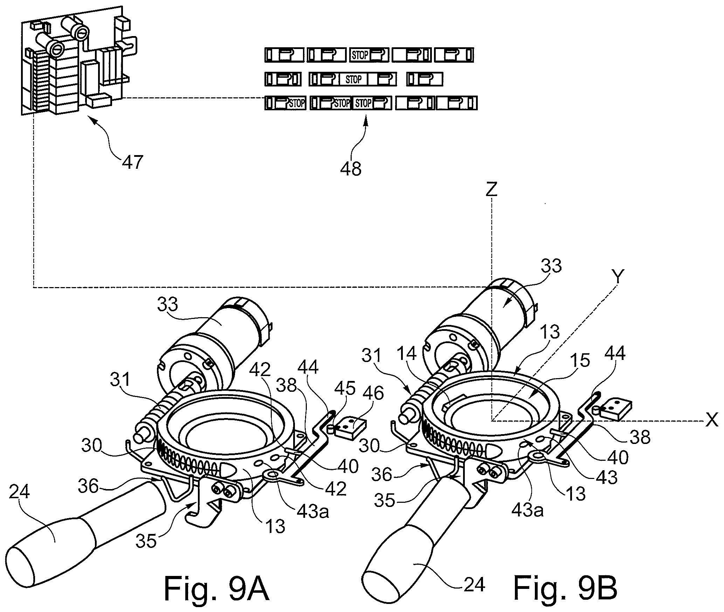

With reference to figures 9A and 9B, indeed, it can be seen that the filter-holder 5, after having been inserted manually by the operator in the annular element 13, to carry out the coupling of the tabs 17 and 18 with the helically-extending guides 14 and 15, making them pass through the free spaces 14a present between the guides, must be subjected to a partial angular displacement that takes the handle 24 to interfere with the elastic element 36, and once it has been passed, the handle 24 engages with the hook 35. In such a position, the operator can command the dispensing of a dose of beverage. Such a command, through the electronic control unit of the machine, before carrying out the dispensing of hot pressurised water, takes care of imparting a command to the motor 33 that, through the worm screw 31 and the rack 30, takes care of giving an angular displacement to the annular element 13.

Such an angular displacement determines a sliding of the guides 14 and 15 under the tabs 17, 18 and thus an axial thrust on the filter-holder 5 in the direction of the axis Z-Z towards the dispensing group until the edge 21a of the filter 21 is brought against a sealing gasket 37 carried by the end 2a of the dispenser 1 that is positioned in the collar-shaped portion 7a of the cavity 7.

When the filter-holder is in properly closed position determined by the motor 33 and also detected by detection devices that will be illustrated in the rest of the present description, the dispensing of hot water is started and the beverage is prepared and dispensed.

At the end of the dispensing, a reverse movement imparted by the same motor 33 causes a reverse angular displacement of the annular element 13 that makes the filter-holder 5 move axially, removing it from engagement with the gasket 37 and taking it into the position from which the operator, gripping the handle 24, can remove it from the plate-shaped element 6 to free it of the coffee grounds.

From what has been described above it is clear that, in accordance with the invention the connection of the filter-holder 5 to the dispensing group 1 takes place with a step servo-assisted by the electric motor 33 and thus with a closing force able to be controlled in a repeatable and constant manner to the great benefit of the lifetime of the mechanical members and of the sealing gaskets as well as relieving the operator of the burden of having to fully lock the filter-holder every time a dose of beverage must be prepared.

The device according to the invention also comprises a sensor member that detects the angular position taken up by said annular element 13 with respect to the tubular cavity 7.

In accordance with a preferred embodiment, said sensor member comprises a rod 38 mounted in an oscillating manner on the plate-shaped element 6 through a pin 39. The rod is provided with a transverse stem 40 that, passing through an opening 41 formed in the wall that delimits the cavity 7, with its end engages with radial reference notches 42, 43 and 43a, formed on the annular element 13 and having a different protrusion or radial recess value and circumferentially displaced from one another.

The same rod 38, with its free end 44 engages with the control button 45 of a microswitch 46.

Such a microswitch 46 makes it possible to detect, for example, two specific positions indicated with M (Maintenance) and S (Safety) with respect to a reference position (O) that depend on which radial notch, 42, 43 or 43a, of the annular element 13 has determined the angular displacement of the rod 38.

When the position detected is that indicated with M or is comprised between M and S, the central unit of the machine, schematised at 47 in figure 9B, sends a technical intervention message to the user interface 48 or directly to the telematic assistance service, to plan maintenance of the device.

The state of coupling between the filter-holder 5 and the dispensing group 1, i.e. with what force it is suitable for the filter-holder to be pressed against the sealing gasket 37, is defined at the design stage of the device according to the invention by identifying a characteristic parameter of such a state.

In an embodiment of the finding, such a parameter can be identified in the intensity of current absorbed by the motor 33 while it is operating. When the intensity of current absorbed by the motor reaches a certain threshold value, defined at the design stage, then the correct state of coupling between filter and gasket has been reached.

Such a value is stored in the central electronic unit 47 as factory data.

Only when the central unit detects said threshold value of the intensity of current absorbed, the power supply of the motor 33 is interrupted and the preparation and dispensing of the beverage begins.

## Claims

1. Device for carrying out the connection of a filter-holder (5) of an espresso coffee machine to the relative hot water dispensing group (1) for producing the beverage, wherein the filter-holder (5) comprises a body, provided with a handle (24), with a cavity inside it defined by a cylindrical wall (19), said cavity constituting housing for the filter (21) to be loaded with ground coffee and being open at the end facing towards the dispensing group and closed with a bottom wall (22) at the opposite end, a beverage dispensing opening (23) formed in said bottom wall, a pair of diametrically opposite tabs (17, 18) projecting radially from said side wall (19) and extending for a circumferential portion outside of said cavity, and wherein the dispensing group (1) comprises an opening (4) suitable for receiving the open end of the cavity of the body of the filter-holder (5) and a pair of guides (14,15) extending helically about an axis (Z-Z) perpendicular to the plane on which the connection between filter-holder and dispensing group occurs, arranged around said opening and each suitable for receiving a respective tab of said pair of tabs (17, 18) of the filter-holder on it, through bayonet coupling, **characterised in that** it comprises a plate-shaped element (6) fixed to said dispensing group (1), said plate-shaped element being provided with an opening (8) in alignment with said opening (4) of the dispensing group, said plate-shaped element (6) being provided with a tubular cavity (7), open at both axial ends (8, 9) arranged in alignment with said openings and in distal position with respect to said opening (4) of the dispensing group, an annular element (13) positioned inside said cavity (7) and free to rotate about the longitudinal axis thereof, said pair of helically-extending guides (14, 15) being formed on the inner wall (16) of said annular element, motor means (30, 31, 32, 33) being foreseen to give angular displacements to said annular element.

2. Device according to claim 1 **characterised in that** said opening (4) of the dispensing group (1) and those (8, 9) of said plate-shaped element (6) are circular and **in that** the cross section of said tubular cavity (7) is circular with a greater diameter than that of said openings.

3. Device according to claims 1 and 2, **characterised in that** said motor means to give angular displacements to said annular element (13) comprise an electric motor (33) and a kinematic coupling between the rotating shaft (32) of said motor and said annular element (13).

4. Device according to claim 3, wherein said kinematic coupling comprises a rack (30) formed on at least at part of the outer surface of said annular element (13) and a worm screw (31) fitted onto the shaft (32) of the motor (33) and coupled with said rack (30).

5. Device according to any one of claims 1 to 4, **characterised in that** it comprises hydraulic sealing gaskets (28, 29) arranged between said annular element (13) and the inner walls of said tubular cavity (7) formed in said plate-shaped element.

6. Device according to any one of claims 1 to 5, **characterised in that** said plate-shaped element (6) comprises a fastening member (35, 36) to engage and hold the handle (24) of the filter-holder (5) when the filter-holder is inserted in said tubular cavity (7) and said pair of tabs (17, 18) is positioned on the pair of helically-extending guides (14, 15) formed on the inner wall of said annular element (13), said fastening member (35, 36) allowing the handle (24) of the filter-holder to be released when it must be removed from the said plate-shaped element (6).

7. Device according to any one of claims 1 to 6, **characterised in that** it comprises sensor members (38, 40, 42, 43, 45,) that detect the angular position taken up by said annular element (13) and make it available to the operator in the form of a corresponding piece of information.

## Patentansprüche

1. Vorrichtung zur Ausführung der Verbindung eines Filterhalters (5) einer Espresso-Kaffeemaschine mit der dazu gehörigen Heißwasserausgabe-Gruppe (1) zur Herstellung des Getränks, wobei der Filterhalter (5) einen Körper umfasst, der mit einem Griff (24) mit einem inwendigen Hohlraum versehen ist, der durch eine zylindrische Wand (19) definiert ist, wobei der Hohlraum das Gehäuse für den Filter (21) bildet, das mit gemahlenem Kaffee befüllt werden soll und an dem Ende offen ist, das der Ausgabegruppe zugewandt und mit einer Bodenwand (22) am gegenüberliegenden Ende geschlossen ist, eine in der Bodenwand ausgebildete Getränkeausgabeöffnung (23), ein Paar von diametral gegenüberliegenden Streifen (17, 18), die radial aus der Seitenwand (19) auskragen und auf einem Umfangsabschnitt außerhalb des Hohlraums verlaufen, und wobei die Ausgabegruppe (1) eine Öffnung (4) umfasst, die dazu geeignet ist, das offene Ende des Hohlraums des Körpers des Filterhalters (5) und ein Paar von Führungen (14, 15) aufzunehmen, die spiralförmig um eine Achse (Z-Z) verlaufen, die senkrecht zu der Ebene angeordnet ist, auf der die Verbindung zwischen dem Filterhalter und der Ausgabegruppe erfolgt, die um der Öffnung angeordnet und jeweils dazu geeignet ist, jeweils einen Streifen des Paares von Streifen (17, 18) des darauf befindlichen Filterhalters mittels Bajonettverbindung aufzunehmen, **dadurch gekennzeichnet, dass** sie ein plattenförmiges Element (6) umfasst, das auf der Ausgabegruppe (1) befestigt ist, wobei das plattenförmige Element mit einer Öffnung (8) versehen ist, die auf die Öffnung (4) der Ausgabegruppe ausgerichtet ist, wobei das plattenförmige Element (6) mit einem rohrförmigen Hohlraum (7) versehen ist, der an beiden axialen Ende (8, 9) offen ist, die auf die Öffnungen ausgerichtet und in distaler Stellung in Bezug auf die Öffnung (4) der Ausgabegruppe angeordnet sind, wobei ein ringförmiges Element (13) innerhalb des Hohlraums (7) angeordnet ist und sich frei um seine Längsachse drehen kann, wobei das Paar von spiralförmig verlaufenden Führungen (14, 15) auf der Innenwand (16) des ringförmigen Elements ausgebildet ist, wobei Motormittel (30, 31, 32, 33) vorgesehen sind, um das ringförmige Element in Winkelverschiebungen zu bringen.

2. Vorrichtung nach Anspruch 1, **dadurch gekennzeichnet, dass** die Öffnung (4) der Ausgabegruppe (1) und die (8, 9) des plattenförmigen Elements (6) kreisförmig sind, sowie dadurch, dass der Querschnitt des rohrförmigen Hohlraums (7) kreisförmig ist und einen größeren Durchmesser als die Öffnungen aufweist.

3. Vorrichtung nach den Ansprüchen 1 und 2, **dadurch gekennzeichnet, dass** die Motormittel, die das ringförmige Element (13) in Winkelverschiebungen bringen, einen Elektromotor (33) und eine kinematische Kopplung zwischen der Drehwelle (32) des Motors und dem ringförmigen Element (13) umfassen.

4. Vorrichtung nach Anspruch 3, wobei die kinematische Kopplung eine Zahnstange (30) umfasst, die wenigstens auf einem Teil der Außenfläche des ringförmigen Elements (13) ausgebildet ist, und eine Schnecke (31), die auf die Welle (32) des Motors (33) aufgesteckt und mit der Zahnstange (30) gekoppelt ist.

5. Vorrichtung nach einem der Ansprüche 1 bis 4, **dadurch gekennzeichnet, dass** sie hydraulische Dichtungen (28, 29) umfasst, die zwischen dem ringförmigen Element (13) und den Innenwänden des rohrförmigen Hohlraums (7) angeordnet sind, die in dem plattenförmigen Element ausgebildet sind.

6. Vorrichtung nach einem der Ansprüche 1 bis 5, **dadurch gekennzeichnet, dass** das plattenförmige Element (6) ein Befestigungsglied (35, 36) umfasst, um den Griff (24) des Filterhalters (5) in Eingriff zu nehmen und zu halten, wenn der Filterhalter in den rohrförmigen Hohlraum (7) eingefügt und das Paar von Streifen (17, 18) auf dem Paar von spiralförmig verlaufenden Führungen (14, 15) angeordnet ist, die auf der Innenwand des ringförmigen Elements (13) ausgebildet sind, wobei das Befestigungsglied (35, 36) es dem Griff (24) des Filterhalters erlaubt, gelöst zu werden, wenn er aus dem plattenförmigen Element (6) entfernt werden muss.

7. Vorrichtung nach einem der Ansprüche 1 bis 6, **dadurch gekennzeichnet, dass** sie Sensorteile (38, 40, 42, 43, 45) umfasst, die die vom ringförmigen Element (13) eingenommene Winkelstellung erfassen und sie für den Bediener in Form einer entsprechenden Information verfügbar machen.

## Revendications

1. Dispositif pour exécuter la connexion d'un porte-filtre (5) d'une machine à café espresso par rapport au groupe de distribution d'eau chaude (1) correspondant pour produire la boisson, dans lequel le porte-filtre (5) comprend un corps, muni d'une poignée (24), avec à l'intérieur une cavité définie par une paroi cylindrique (19), ladite cavité constituant un logement pour le filtre (21) à remplir avec du café moulu et étant ouverte à une extrémité faisant face vers le groupe de distribution et fermée avec une paroi inférieure (22) à l'extrémité opposée, une ouverture de distribution de boisson (23) formée dans ladite paroi inférieure, une paire de pattes diamétralement opposées (17, 18) faisant saillie radialement à partir de ladite paroi latérale (19) et s'étendant sur une portion circonférentielle à l'extérieur de ladite cavité, et dans lequel le groupe de distribution (1) comprend une ouverture (4) adaptée pour recevoir l'extrémité ouverte de la cavité du corps du porte-filtre (5) et une paire de guides (14,15) s'étendant hélicoïdalement autour d'un axe (Z-Z) perpendiculaire au plan sur lequel se produit la connexion entre porte-filtre et groupe de distribution, agencés autour de ladite ouverture et chacun adapté pour recevoir sur celui-ci une patte respective de ladite paire de pattes (17, 18) du porte-filtre, par le biais d'un accouplement à baïonnette, **caractérisé en ce qu'**il comprend un élément en forme de plaque (6) fixé audit groupe de distribution (1), ledit élément en forme de plaque étant muni d'une ouverture (8) en alignement avec ladite ouverture (4) du groupe de distribution, ledit élément en forme de plaque (6) étant pourvu d'une cavité tubulaire (7), ouverte aux deux extrémités axiales (8, 9) agencées en alignement avec lesdites ouvertures et en position distale par rapport à ladite ouverture (4) du groupe de distribution, un élément annulaire (13) positionné à l'intérieur de ladite cavité (7) et libre de tourner autour de son axe longitudinal, ladite paire de guides s'étendant hélicoïdalement (14, 15) étant formée sur la paroi intérieure (16) dudit élément annulaire, des moyens de moteur (30, 31, 32, 33) étant prévus pour donner des déplacements angulaires audit élément annulaire.

2. Dispositif selon la revendication 1 **caractérisé en ce que** ladite ouverture (4) du groupe de distribution (1) et celles (8, 9) dudit élément en forme de plaque (6) sont circulaires et **en ce que** la section transversale de ladite cavité tubulaire (7) est circulaire avec un plus grand diamètre que celui desdites ouvertures.

3. Dispositif selon les revendications 1 et 2, **caractérisé en ce que** lesdits moyens de moteur pour donner des déplacements angulaires audit élément annulaire (13) comprennent un moteur électrique (33) et un accouplement cinématique entre l'arbre tournant (32) dudit moteur et ledit élément annulaire (13).

4. Dispositif selon la revendication 3, dans lequel ledit accouplement cinématique comprend une crémaillère (30) formée sur au moins une partie de la surface extérieure dudit élément annulaire (13) et une vis sans fin (31) montée sur l'arbre (32) du moteur (33) et couplée avec ladite crémaillère (30).

5. Dispositif selon l'une quelconque des revendications 1 à 4, **caractérisé en ce qu'**il comprend des joints d'étanchéité hydraulique (28, 29) agencés entre ledit élément annulaire (13) et les parois intérieures de ladite cavité tubulaire (7) formée dans ledit élément en forme de plaque.

6. Dispositif selon l'une quelconque des revendications 1 à 5, **caractérisé en ce que** ledit élément en forme de plaque (6) comprend un élément de fixation (35, 36) pour engager et maintenir la poignée (24) du porte-filtre (5) quand le porte-filtre est inséré dans ladite cavité tubulaire (7) et ladite paire de pattes (17, 18) est positionnée sur la paire de guides s'étendant hélicoïdalement (14, 15) formée sur la paroi intérieure dudit élément annulaire (13), ledit élément de fixation (35, 36) permettant de libérer la poignée (24) du porte-filtre quand il doit être retiré dudit élément en forme de plaque (6).

7. Dispositif selon l'une quelconque des revendications 1 à 6, **caractérisé en ce qu'**il comprend des éléments de capteur (38, 40, 42, 43, 45,) qui détectent la position angulaire prise par ledit élément annulaire (13) et le met à disposition de l'opérateur sous la forme d'une information correspondante.
